# EUROPÄISCHE PATENTANMELDUNG

(11) **EP 3 835 018 A1**
(43) Veröffentlichungstag der Anmeldung: **16.06.2021**
(21) Anmeldenummer: 19215487.0
(22) Anmeldetag: 12.12.2019
(51) Int. Cl.: B27G 15/00, B27C 1/00, C23C 30/00, B26D 1/00

(54) **SCHNEIDELEMENT UND VERWENDUNG DAVON**

(71) Anmelder: Ceratizit Luxembourg Sàrl, 8232 Mamer (LU)
(72) Erfinder: KEMDEM, Louis Patrick Fetcheping, 8232 Mamer (LU); MAGIN, Michael, 8232 Mamer (LU)
(74) Vertreter: Ciesla, Dirk

(57) **Zusammenfassung**

Um Schneidelement (1), welches zur Zerspanung eines nichtmetallischen Verbundwerkstoffes aus einer Matrix und durch die Matrix zusammengehaltenen Teilchen ausgebildet ist, aufweisend eine Freifläche (4), eine Spanfläche (5) und eine durch eine Kantenbeschichtung (2) beschichtete Schneidkante (6), durch welche die Freifläche (4) und die Spanfläche (5) miteinander verbunden sind, anzugebene, mit dem in verbesserter Weise der nichtmetallische Verbundwerkstoff zerspant werden kann, wird vorgeschlagen, dass die Schneidkante (6) innerhalb eines Schneidkantenabschnitts (8) davon derart gekrümmt ist, dass die Schneidkante (2) unmittelbar unterhalb der Kantenbeschichtung (2) in einem Schnitt in einer Schnittebene, die senkrecht zu der Schneidkante (6) steht, in jedem Punkt des Schneidkantenabschnitts (8) einen lokalen Krümmungsradius (9) aufweist, der größer oder gleich 10 µm und kleiner oder gleich 80 µm, vorzugsweise größer oder gleich 15 µm und kleiner oder gleich 60 µm, noch mehr bevorzugt größer oder gleich 20 µm und kleiner oder gleich 40 µm, ist.

## Beschreibung

Die vorliegende Erfindung betrifft ein Schneidelement, welches zur Zerspanung eines nichtmetallischen Verbundwerkstoffes aus einer Matrix und durch die Matrix zusammengehaltenen Teilchen ausgebildet ist, aufweisend eine Freifläche, eine Spanfläche und eine durch eine Kantenbeschichtung beschichtete Schneidkante, durch welche die Freifläche und die Spanfläche miteinander verbunden sind.

Ferner betrifft die vorliegende Erfindung eine Verwendung des Schneidelements.

Bei dem nichtmetallischen Verbundwerkstoff werden die Teilchen zum Beispiel durch Holz gebildet, zum Bespiel in Form von Holzspänen oder Holzfasern, oder durch Carbon, zum Bespiel in Form von Carbonfasern, oder Glas, zum Bespiel in Form von Glasfasern, oder durch ein Mineral natürlichen oder synthetischen Ursprungs, zum Beispiel in Form von Mineralfasern. Die Matrix basiert zum Beispiel auf einer oder mehreren organischen Verbindungen, insbesondere in Form eines Kunststoffs.

Im Falle der Holzspäne und Holzfasern wird die Matrix durch einen bestimmten Kunststoff gebildet, nämlichen einen Klebstoff, zum Beispiel einen Leim, die Holzspäne bzw. Holzfasern darin getränkt und anschließend gepresst. Werden die Holzspäne verwendet, werden auf diese Weise zum Beispiel Spanplatten hergestellt, werden die Holzfasern hingegen verwendet, zum Beispiel sogenannte mitteldichte Faserplatten (MDF) oder hochverdichtete Faserplatten (HDF). MDF-Platten und HDF-Platten sind außerdem üblicherweise mit einer Kunststoffbeschichtung, einer Lackierung oder einem Furnier versehen, weil dies optisch ansprechend wirken kann, was die Zerspanung noch anspruchsvoller macht.

Im Falle der Carbonfasern und Glasfasern, welche je nach ihrer Länge in Kurz- oder Langfasern unterteilt werden können (das Gleiche ist auch auf die Holzfasern anwendbar), wird die Matrix durch einen Kunststoff gebildet. Diesen Teilchen entsprechend wird der solchermaßen gebildete nichtmetallische Verbundwerkstoff als carbonfaserverstärkter Kunststoff (CFK) bzw. glasfaserverstärkter Kunststoff (GFK) bezeichnet.

Bei der Zerspanung des nichtmetallischen Verbundwerkstoffes, was sich grundsätzlich von der Zerspanung von Metallen und Legierungen daraus unterscheidet, tritt üblicherweise abrasiver Verschleiß vor allem an einer Schneidkante, aber auch an den daran angrenzenden Bereichen der Freifläche und der Spanfläche auf. Ist der Verschließ zu weit fortgeschritten, ist die Qualität des zerspanten nichtmetallischen Verbundwerkstoffes nicht mehr akzeptabel.

Das aus der WO 2012/162849 A1 vorbekannte gattungsbildende Schneidelement ist daher beschichtet. Die Standzeit wird dementsprechend gegenüber einem unbeschichteten Schneidelement erhöht.

Allerdings neigt die Beschichtung beim vorbekannten Schneidelement dazu, bei großer Schneidkantenbelastung, abzuplatzen. Dies reduziert die durch die Kantenbeschichtung eigentlich erreichbar Standzeit.

Die Aufgabe der vorliegenden Erfindung ist daher, ein Schneidelement und eine Verwendung mit einer längeren Standzeit anzugeben, wonach in verbesserter Weise der nichtmetallische Verbundwerkstoff zerspant werden kann, insbesondere in Form einer Spanplatte, MDF, HDF, GFK oder CFK.

Diese Aufgabe wird durch ein Schneidelement nach Anspruch 1 gelöst. Vorteilhafte Weiterbildungen werden in den davon abhängigen Ansprüchen angegeben.

Das Schneidelement, welches zur Zerspanung eines nichtmetallischen Verbundwerkstoffes aus einer Matrix und durch die Matrix zusammengehaltenen Teilchen ausgebildet ist, weist eine Freifläche, eine Spanfläche und eine durch eine Kantenbeschichtung beschichtete Schneidkante, durch welche die Freifläche und die Spanfläche miteinander verbunden sind, auf, wobei die Schneidkante innerhalb eines Schneidkantenabschnitts davon derart gekrümmt ist, dass die Schneidkante unmittelbar unterhalb der Kantenbeschichtung in einem Schnitt in einer Schnittebene, die senkrecht zu der Schneidkante steht, in jedem Punkt des Schneidkantenabschnitts einen lokalen Krümmungsradius aufweist, der größer oder gleich 10 µm und kleiner oder gleich 80 µm, vorzugsweise größer oder gleich 15 µm und kleiner oder gleich 60 µm, noch mehr bevorzugt größer oder gleich 20 µm und kleiner oder gleich 40 µm, ist. Dadurch wird eine abgerundete Schneidkante bereitgestellt, welche das Schneidelement hinreichend schnittscharf macht (die Kantenbeschichtung, welche im Eingriff mit dem nichtmetallischen Verbundwerkstoff beim Zerspanen steht, kann der Kantenbeschichtung folgend ausgebildet, zum Beispiel weil sie darauf abgeschieden wurde), und zugleich hinreichend gering gekrümmt ist, dies aufgrund des Krümmungsradius in jedem Punkt des Schneidkantenabschnitts in dem Schnitt in der Schnittebene, um die Anhaftung der Kantenbeschichtung in verbesserter Weise zu gewährleisten. Die Schneidkante kann danach innerhalb des Schneidkantenabschnitts in dem Schnitt in der Schnittebene kreisförmig oder elliptisch oder sonst wie verrundet ausgebildet sind.

Der Schneidkantenabschnitt kann in dem Schnitt in der Schnittebene symmetrisch sein oder asymmetrisch.

Die Freifläche und/oder die Spanfläche können jeweils eine oder mehrere Fasen aufweisen, bevor sie durch die Schneidkante miteinander verbunden sind. Die Freifläche und/oder die Spanfläche können eben, facettiert oder gekrümmt ausgebildet sein oder durch eine Kombination davon ausgebildet sein.

Die Schneidkante kann zwischen zwei äußeren Ecken des Schneidelements gerade oder gekrümmt oder gemäß einer Kombination daraus verlaufend ausgebildet sein; ein Normalenvektor der senkrechten Schnittebene steht dabei parallel zu einer an der Schneidkante in einem Punkt angelegten Tangente.

Gemäß einer Weiterbildung des Schneidelements erstreckt sich der Schneidkantenabschnitt über mindestens 50 %, vorzugsweise mindestens 70 %, noch mehr bevorzugt mindestens 90% der Schneidkante in dem Schnitt in der Schnittebene. Dadurch wird die Anhaftung der Kantenbeschichtung innerhalb dieses Abschnitts verbessert, weil er dem Krümmungsradius entsprechend gering gekrümmt ist. Im Falle eines in allen Punkten konstanten Krümmungsradius ist es besonders vorteilhaft, wenn sich der Schneidkantenabschnitt über 100 %, also die gesamte Schneidkante in dem Schnitt in der Schnittebene erstreckt.

Die Kantenbeschichtung ist vorzugsweise der Form der Schneidkante folgend ausgebildet, also derart gekrümmt, dass sie in dem Schnitt in der Schnittebene, die senkrecht zu der Schneidkante steht, in jedem Punkt einen lokalen anderen Krümmungsradius aufweist, der größer ist, als der Krümmungsradius an dem gegenüberliegenden Punkt der Schneidkante unmittelbar unterhalb der Kantenbeschichtung.

Die Zusammensetzung der Kantenbeschichtung, welche mehrere Einzelschichten oder nur eine Schicht umfassen kann, ist von der Zusammensetzung der Schneidkante, also der entsprechenden Zusammensetzung eines Substratkörpers, welcher die Schneidkante, die Spanfläche und Spanfläche bildet, verschieden. Dadurch wird durch die Kantenbeschichtung eine dem Schneidkantenabschnitt gegenüberliegende äußere Schneidkante des Schneidelements gebildet, welche hinreichend schnittscharf ist und zugleich aufgrund der gekrümmten Schneidkante an dem Substratkörper hinreichend anhaftet.

Gemäß einer Weiterbildung des Schneidelements ist der Krümmungsradius in mindestens zwei verschiedenen, vorzugsweise in allen, der Punkte des Schneidkantenabschnitt in dem Schnitt in der Schnittebene gleich groß. Wenn er in allen Punkten gleich groß ist, ist die Schneidkante in dem Schnitt in der Schnittebene kreisförmig, was für die Anhaftung der Kantenbeschichtung angesichts besonders gut ist.

Gemäß einer Weiterbildung des Schneidelements ist durch die Freifläche und die Spanfläche ein Keilwinkel in dem Schnitt in der Schnittebene definiert, ist durch einen kleinsten Krümmungsradius der Krümmungsradien die Position und der Radius eines Kreises in dem Schnitt in der Schnittebene definiert und ist ein Punkt auf einer durch den Keilwinkel definierten Winkelhalbierenden durch das Zentrum dieses Kreises definiert. Dadurch erreicht die Schneidkante ihre maximale Schnittschärfe an einem äußeren Punkt dieser, wobei dort zugleich eine hinreichende Anhaftung der Kantenbeschichtung bereitgestellt wird. Dies ist eine Form, welche bei einem Folgen dieser durch die Kantenbeschichtung für das Zerspanen des nichtmetallischen Verbundwerkstoffs besonders gut geeignet ist. Der Scheitelpunkt des Keilwinkels liegt dabei außerhalb des Schneidkantenabschnitts (er kann ggf. innerhalb der Kantenbeschichtung liegen), sein einer Winkelschenkel tangiert die Spanfläche und sein anderer Winkelschenkel die Freifläche. Der Scheitelpunkt ist ein Punkt auf der Winkelhalbierenden, durch welche der innenliegende, also der Schneidkante zugewandte Keilwinkel halbiert wird. Denn dadurch wird die Schneidkante unter Beibehaltung einer hinreichenden Anhaftung der Kantenbeschichtung besonders schnittscharf.

Gemäß einer Weiterbildung des Schneidelements ist die Schneidkante zumindest im Bereich des Schneidkantenabschnitts durch ein Hartmetall oder Cermet gebildet. Indem die Schneidkante und damit ein entsprechender Substratkörper des Schneidelements, welcher auch die Schneidkante bildet, im Bereich der Schneidkante durch eines dieser Materialien gebildet sind, wird die Standzeit des Schneidelements noch weiter erhöht, weil diese besonders hart und verschleißfest sind.

Hartmetall (cemented carbide) und Cermet sind im Sinne der vorliegenden Offenbarung jeweils Verbundwerkstoffe, bei denen Hartstoffpartikel, die den überwiegenden Bestandteil des Verbundwerkstoffs ausmachen, eine Skelett- oder Gerüststruktur bilden, deren Zwischenräume durch einen demgegenüber duktileren metallischen Binder gefüllt sind. Die Hartstoffpartikel können dabei insbesondere zumindest überwiegend durch Wolframkarbid, Titankarbid und/oder Titankarbonitrid gebildet sein, wobei in geringeren Mengen zusätzlich z. B. auch andere Hartstoffpartikel, insbesondere Karbide der Elemente der Gruppen IV bis VI des Periodensystems, vorhanden sein können. Der duktile metallische Binder besteht üblicherweise zumindest überwiegend aus Cobalt, Nickel, Eisen oder einer Basislegierung von zumindest einem dieser Elemente. Es können allerdings in geringeren Mengen auch noch andere Elemente in dem metallischen Binder gelöst sein. Unter einer Basislegierung ist dabei zu verstehen, dass dieses Element den überwiegenden Bestandteil der Legierung bildet. Am häufigsten kommt Hartmetall zum Einsatz, bei dem die Hartstoffpartikel zumindest überwiegend durch Wolframkarbid gebildet sind und der metallische Binder eine Cobalt- oder Cobalt-Nickel-Basislegierung ist; der Gewichtsanteil der entsprechenden Wolframkarbid-Partikel ist dabei insbesondere mindestens 70 Gewichtsprozent, vorzugsweise mehr als 80 Gewichtsprozent, noch bevorzugter mehr als 90 Gewichtsprozent.

Gemäß einer Weiterbildung des Schneidelements ist die Kantenbeschichtung zumindest im Bereich der Schneidkante durch mindestens eine abgeschiedene Hartstoffschicht gebildet, wo die Kantenbeschichtung auf dem Schneidkantenabschnitt ausgebildet ist. Dadurch wird die Standzeit des Schneidelements noch weiter erhöht, weil eine solche Hartstoffschicht besonders verschleißfest ist und diese der Schneidkante dadurch folgend ausgebildet ist, also entsprechend gekrümmt ist.

Diese Weiterbildung wird noch weiter verbessert, wenn die Hartstoffschicht durch Diamant, amorphen Kohlenstoff, kubisches Bornitrid oder TiB₂ gebildet ist. Dies verbessert die Standzeit noch weiter. Besonders bevorzugt sind mehrere durch Diamant gebildete polykristalline Hartstoffschichten auf dem Schneidkantenabschnitt und damit dem entsprechenden Substratkörper, insbesondere wenn dieser durch das Hartmetall oder Cermet gebildet ist, abgeschieden. Vorzugsweise sind eine oder mehrere durch den amorphen Kohlenstoff gebildeten Hartstoffschichten auf dem Schneidkantenabschnitt und damit dem entsprechenden Substratkörper, insbesondere wenn dieser durch das Hartmetall oder Cermet gebildet ist, abgeschieden. Amorpher Kohlenstoff ist auch bekannt unter den Bezeichnungen DLC (Diamond-like Carbon) oder diamantähnlicher Kohlenstoff. Bei der oder den durch amorphen Kohlenstoff gebildeten Schichten handelt es sich vorzugsweise um solche, die wasserstoffhaltig sind, wobei der Wasserstoffanteil mindestens 35 Atomprozent beträgt (Rest Kohlenstoff), sogenannter a:C, a-C:H amorpher Kohlenstoff, oder solche, bei denen der Kohlenstoff tetraedrisch ist, wobei der Wasserstoffanteil mindestens 25 Atomprozent beträgt (Rest Kohlenstoff) und der Kohlenstoff sp³ hybridisiert ist, sogenannter t-a:C, t-a-C:H amorpher Kohlenstoff.

Gemäß einer Weiterbildung des Schneidelements ist die Kantenbeschichtung auf die Freifläche und/oder auf die Spanfläche erstreckend ausgebildet. Dies erhöht die Standzeit des Schneidelements auf einer oder beiden dieser Flächen. Vorzugsweise ist entspricht die Mikrohärte der Kantenbeschichtung, wo diese auf die Freifläche und/oder auf die Spanfläche ausgebildet ist, der Mikrohärte der Kantenbeschichtung, wo die Kantenbeschichtung auf dem Schneidkantenabschnitt ausgebildet ist.

Gemäß einer Weiterbildung des Schneidelements ist eine Schichtdicke der Kantenbeschichtung zumindest im Bereich der Schneidkante größer oder gleich 0,5 µm und kleiner oder gleicher 20 µm, vorzugsweise größer oder gleich 5 µm und kleiner oder 20 µm, wo die Kantenbeschichtung auf dem Schneidkantenabschnitt ausgebildet ist. Dies sind Schichtdicken, welche insbesondere aber nicht nur im Falle der abgeschiedenen Diamant-Hartstoffschicht oder mehreren Schichten davon sowie der abgeschiedenen Hartstoffschicht aus amorphen Kohlenstoff oder mehreren Schichten davon, die Standzeit weiter erhöhen. Die Schichtdicke ist im Rahmen der vorliegenden Offenbarung als der kleinste Abstand von der Außenoberfläche der Kantenbeschichtung zu dem Schneidkantenabschnitt und damit dem entsprechenden Substratkörper im Bereich davon definiert, also senkrecht zu einer an die Kantenbeschichtung angelegten Tangentialebene.

Gemäß einer Weiterbildung des Schneidelements die Kantenbeschichtung durch ein PVD- oder ein CVD-Abscheidungsverfahren zumindest auf dem Schneidkantenabschnitt ausgebildet. Die Kantenbeschichtung wird demnach in der dem Fachmann bekannten Weise mittels PVD (physical vapor deposition) oder CVD (chemical vapor desposition) abgeschieden; denkbar und auch möglich sind aber auch andere Verfahren dafür. Vorzugsweise wird die so abgeschiedene mindestens eine Hartstoffschicht an ihrer Außenoberfläche nach der Abscheidung einer Oberflächenbehandlung durch zum Beispiel Nassstrahlen oder dergleichen unterzogen, um diese zu glätten und ggf. vorhandene Eigenspannungen darin abzubauen.

Gemäß einer Weiterbildung des Schneidelements ist es als Schneidmesser ausgebildet. Danach wird durch die Schneidkante eine Messerkante gebildet, was für die Zerspanung des Verbundwerkstoffs, insbesondere wenn die Teilchen durch Holzspäne oder Holzfasern gebildet sind, besonders zweckmäßig ist, das Schneidelement ist flach ausgebildet, insbesondere zur zumeist flächigen Abtragung dünner Schichten von dem Verbundwerkstoff. Dies im Unterschied zu einem Schneidelement, das für die Zerspanung von Metallen und Legierungen daraus ausgebildet ist.

Gemäß einer Weiterbildung des Schneidelements ist es an einem Bohrwerkzeug, Fräswerkzeug oder Hobelwerkzeug ausgebildet. Die durch die gekrümmte Schneidkante des Schneidelements erhöhte Standzeit davon schlägt in vorteilhafterweise auf diese Werkzeuge nieder. Insbesondere weist das Schneidelement diese Werkzeuge auf, so dass ein Bohrwerkzeug, ein Fräswerkzeug oder ein Hobelwerkzeug mit dem Schneidelement oder mehreren davon im Sinne der vorliegenden Offenbarung bereitgestellt wird.

Gemäß einer Weiterbildung sind die Teilchen durch Holzspäne oder Holzfasern gebildet und ist die Matrix durch einen Klebstoff gebildet. Die erhöhte Standzeit des Schneidelements kommt dabei besonders gut zum Tragen, weil der danach gebildete Verbundwerkstoff besonders abrasiv ist. Alternativ können die Teilchen durch Carbonfasern oder Glasfasern gebildet sein und die Matrix Gemäß einer Weiterbildung des Schneidelements ist dieses für die Zerspanung des nichtmetallischen Verbundwerkstoffs ausgebildet, wenn dieser eine Spanplatte, MDF, HDF, CFK oder GFK ist.

Die Aufgabe wird auch durch die Verwendung nach Anspruch 13 gelöst, also durch eine Verwendung eines Schneidelements nach Anspruch 1 oder einem davon abhängigen Anspruch oder den offenbarten Weiterbildungen oder Ausführungsformen des Schneidelements zum Zerspanen zum Zerspanen des nichtmetallischen Verbundwerkstoffes. Das Schneidelement wird danach insbesondere dazu verwendet, den nichtmetallischen Verbundwerkstoff in vorgegebener Weise zu trennen, zum Beispiel durch Fräsen oder Hobeln, wobei die gekrümmte Schneidkante für einen besonders sauberen Schnitt auch bei hohen Schnittgeschwindigkeiten und längerer Schnittdauer sorgt. Dabei kann der nichtmetallische Verbundwerkstoff bereichsweise aus einer Spanplatte, MDF oder HDF gebildet sein und in einem übrigen Bereich aus GFK oder CFK (dies kann als hybrider nichtmetallischer Verbundwerkstoff bezeichnet werden), wobei das Schneidelement dazu verwendet wird, beide Bereiche nacheinander oder gemeinsam, etwa entlang einer gemeinsam Grenzfläche, zu zerspanen.

Die Verwendung des Schneidelements wird noch weiter verbessert, wenn die Teilchen durch Holzspäne oder Holzfasern gebildet sind und die Matrix durch einen Klebstoff gebildet ist. Dabei kommt der Vorteil des Schneidelements besonders gut zum Tragen, weil in der solchermaßen gebildeten Spanplatte im Falle der Holzspäne und der solchermaßen gebildeten MDF und HDF im Falle der Holzfasern besonders saubere Schnitte dadurch erzeugt werden können, wobei zugleich die Standzeit durch eine bessere Anhaftung der Schneidkantenbeschichtung erhöht ist.

Die Verwendung des Schneidelements wird außerdem verbessert, wenn die Teilchen durch Carbonfasern oder Glasfasern gebildet sind und die Matrix durch einen Kunststoff gebildet ist. Es wird also ein CFK bzw. ein GFK bereitgestellt. Dabei kommt der Vorteil des Schneidelements besonders gut zum Tragen, weil in dem CFK und GFK besonders saubere Schnitte dadurch erzeugt werden können, wobei zugleich die Standzeit durch eine bessere Anhaftung der Schneidkantenbeschichtung erhöht ist.

Die Verwendung des Schneidelements wird außerdem noch weiter verbessert, wenn auf einer Oberfläche des Verbundwerkstoffs, insbesondere wenn die Teilchen durch Holzfasern oder Holzspäne gebildet sind, ein Furnier, eine Kunststoffschicht oder eine Lackierung ausgebildet ist. Dann kommt die verbesserte Standzeit bei der hinreichenden Schnittschärfe noch besser zum Tragen, weil diese Oberflächenmaterialen besonders leicht reißen.

Weitere Vorteile und Zweckmäßigkeiten der Erfindung ergeben sich anhand der nachfolgenden Beschreibung eins Ausführungsbeispiels unter Bezugnahme auf die beigefügten Figuren.

Von den Figuren zeigen:
- Fig. 1:: ein perspektivische, schematische sowie abschnittsweise Querschnittdarstellung eines beschichteten Schneidelements im Bereich seiner Schneidkante, Freifläche und Spanfläche;
- Fig. 2:: Detaildarstellung des Schneidelements aus Fig. 1 im Schnitt in einer Schnittebene senkrecht zu der Schneidkante;
- Fig. 3:: Detaildarstellung des Schneidelements gemäß Fig. 2 mit zusätzlich gezeigtem Keilwinkel.

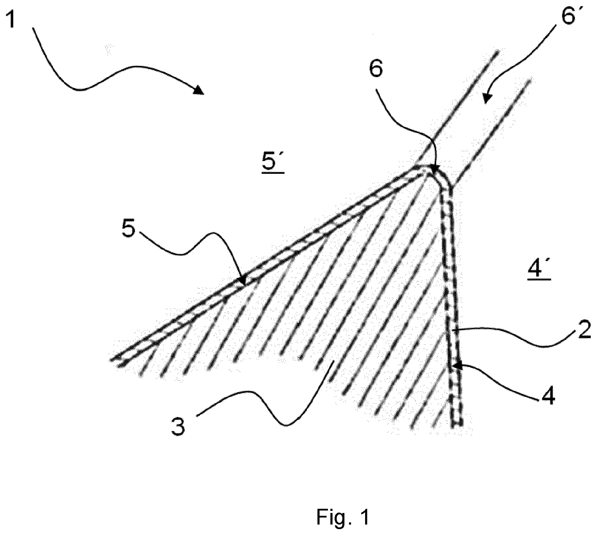

In Fig. 1 ist eine perspektivische, schematische sowie abschnittsweise Querschnittdarstellung eines Schneidelements 1 zum Schneiden eines nichtmetallischen Verbundwerkstoffs im Sinne der vorliegenden Offenbarung ersichtlich; eine Schnittdarstellung wurde also perspektivisch gedreht, so dass daraus der Querschnitt und der übrige Aufbau des Schneidelements 1 ersichtlich sind.

Das Schneidelement 1 ist mit einer Hartstoffschicht 2 aus ausgeschiedenem polykristallinem Diamant beschichtet. Die Hartstoffschicht 2 wurde dabei auf einem keilförmigen Substratkörper 3, welcher durch ein Wolframkarbid-haltiges Hartmetall gebildet ist, des Schneidelements 1 abgeschieden, und zwar auf eine ebene Freifläche 4, eine ebene Spanfläche 5 und eine gekrümmte Schneidkante 6, durch welche die Freifläche 4 und die Spanfläche 5 verbunden sind; denkbar und auch möglich sind aber auch mehrere Hartstoffschichten 2 aus dem abgeschiedenen Diamant oder einem anderen Hartstoff wie zum Beispiel amorphen Kohlenstoff.

Die Freifläche 4, die Spanfläche 5 und die Schneidkante 6 sind also mit der Hartstoffschicht 2 beschichtet; sie schützt damit den demgegenüber weicheren Substratkörper 3 vor Verschleiß beim Zerspanen. Der eigentliche Eingriff in den nichtmetallischen Verbundwerkstoff beim Zerspanen wird also durch die Hartstoffschicht 2 gebildet, welche der Form des Substratkörpers 3 folgend ist, also dort gekrümmt ist, wo die Schneidkante 6 ausgebildet ist, und dort eben ist, wo Freifläche 4 und Spanfläche 5 ausgebildet sind. Der Substratkörper 3 ist dabei zwar grundsätzlich für die Zerspanung des nichtmetallischen Verbundwerkstoffs geeignet, jedoch üblicherweise nicht hinreichend verschleißbeständig. Dementsprechend weist die Hartstoffschicht 2 nach außen, also dem nichtmetallischen Verbundwerkstoff zugewandt, eine der Schneidkante 6 folgende und dementsprechend gekrümmte Schneidkante 6', eine der Freifläche 4 folgende ebene Freifläche 4' und eine der Spanfläche 5 folgende ebene Spanfläche 5' auf; die Längserstreckung der Schneidkante 6' wird durch die Längserstreckung der Schneidkante 6' verdeckt. Mit anderen Worten ausgedrückt, durch eine lineare Skalierung kann die Kontur des Substratkörpers 3 in die Außenkontur der Hartstoffschicht 2 überführt werden und umgekehrt.

Die Schichtdicke der Hartstoffschicht 3 ist exemplarisch als konstant dargestellt, wobei diese durch den jeweils kleinsten Abstand ihrer Oberflächen (Freifläche 4', Spanfläche 5', der der Schneidkante 6' entsprechenden gekrümmten Oberfläche der Hartstoffschicht 3) zu den diesen gegenüberliegenden Flächen des Substratkörpers (Freifläche 4, Spanfläche 5, der der Schneidkante 6 entsprechenden gekrümmten Fläche des Substratkörpers 3) definiert ist.

An dieser Stelle wird ausdrücklich festgehalten, dass die Hartstoffschicht 3 auch nur auf die Schneidkante 6 oder nur auf die Schneidkante 6 und die Freifläche 4 oder nur auf die Schneidkante 6 und die Spanfläche 5 abgeschieden sein kann.

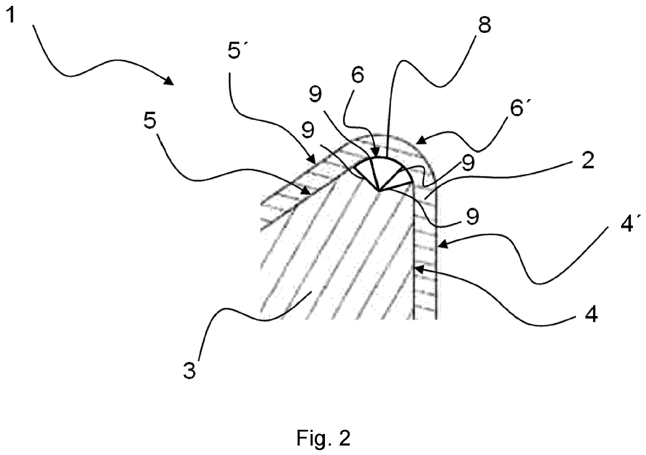

In der in Fig. 2 gezeigten Detaildarstellung des Schneidelements 1 in einem Schnitt in einer Schnittebene senkrecht zu der Schneidkante 6 und damit der Schneidkante 6' ist die gekrümmte Schneidkante 6 besonders gut ersichtlich. Innerhalb eines kreisförmigen Schneidkantenabschnitts 8 der Schneidkante 6, welcher sich über die gesamte Schneidkante 9 unmittelbar unterhalb der Hartstoffschicht 2 erstreckt, also 100 % davon, kann jedem Punkt des Schneidkantenabschnitts 8 ein dementsprechend lokaler Krümmungsradius 9 zugeordnet werden (aus Gründen der Übersichtlichkeit werden lediglich vier Krümmungsradien 9 gezeigt). Da der Schneidkantenabschnitt 8 kreisförmig ist, sind die Krümmungsradien 9 gleich groß. Die Schneidkantenabschnitt 8 und damit die Schneidkante 6 beginnen dabei aufseiten der Freifläche 4 dort, wo diese aufhört, eben zu sein, und aufseiten der Spanfläche 5 dort, wo diese aufhört, eben zu sein. Dementsprechend beginnt die Schneidkante 6' aufseiten der Freifläche 4' dort, wo diese aufhört, eben zu sein, und aufseiten der Spanfläche 5', dort wo diese aufhört, eben zu sein. Die Schneidkante 6' ist damit ebenfalls kreisförmig gekrümmt, jedoch mit einem größeren Krümmungsradius in jedem Punkt davon.

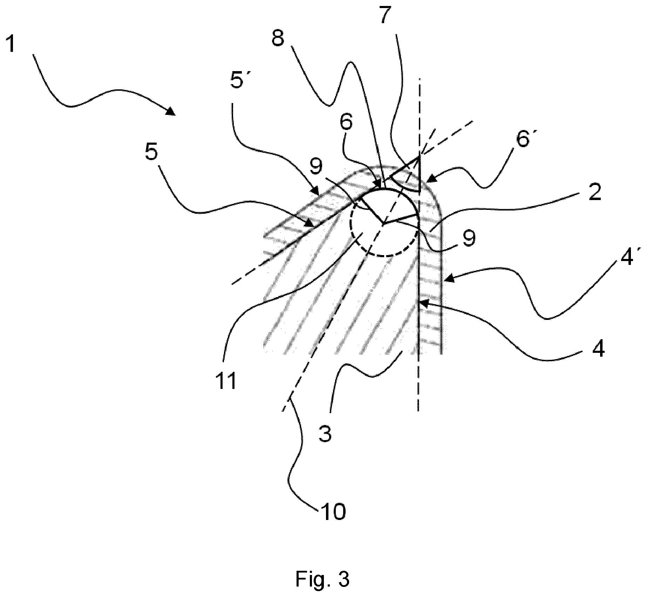

Die Darstellung in Fig. 3 entspricht der in Fig. 2 mit dem Unterschied, dass ein Keilwinkel 7 ausdrücklich gezeigt wird, den die Freifläche 4 und die Spanfläche 5 miteinander bilden; der Keilwinkel 7 beträgt exemplarisch 56°, denkbar und auch sind aber auch kleinere oder größere Keilwinkel. Die Winkelhalbierende 10 des Keilwinkels 7 durchstößt dabei das Zentrum eines Kreises 11, wobei das Zentrum durch die Krümmungsradien 9 definiert ist.

## Patentansprüche

1. Schneidelement (1), welches zur Zerspanung eines nichtmetallischen Verbundwerkstoffes aus einer Matrix und durch die Matrix zusammengehaltenen Teilchen ausgebildet ist, aufweisend eine Freifläche (4), eine Spanfläche (5) und eine durch eine Kantenbeschichtung (2) beschichtete Schneidkante (6), durch welche die Freifläche (4) und die Spanfläche (5) miteinander verbunden sind, **dadurch gekennzeichnet, dass** die Schneidkante (6) innerhalb eines Schneidkantenabschnitts (8) davon derart gekrümmt ist, dass die Schneidkante (2) unmittelbar unterhalb der Kantenbeschichtung (2) in einem Schnitt in einer Schnittebene, die senkrecht zu der Schneidkante (6) steht, in jedem Punkt des Schneidkantenabschnitts (8) einen lokalen Krümmungsradius (9) aufweist, der größer oder gleich 10 µm und kleiner oder gleich 80 µm, vorzugsweise größer oder gleich 15 µm und kleiner oder gleich 60 µm, noch mehr bevorzugt größer oder gleich 20 µm und kleiner oder gleich 40 µm, ist.

2. Schneidelement (1) nach Anspruch 1, **dadurch gekennzeichnet, dass** sich der Schneidkantenabschnitt (8) über mindestens 50 %, vorzugsweise mindestens 70 %, noch mehr bevorzugt mindestens 90%, der Schneidkante (6) in dem Schnitt in der Schnittebene erstreckt.

3. Schneidelement (1) nach Anspruch 1 oder 2, **dadurch gekennzeichnet, dass** durch die Freifläche (4) und die Spanfläche (5) ein Keilwinkel (7) in dem Schnitt in der Schnittebene definiert ist, durch einen kleinsten Krümmungsradius (9) der Krümmungsradien (9) die Position und der Radius (9) eines Kreises (11) in dem Schnitt in der Schnittebene definiert ist und ein Punkt auf einer durch den Keilwinkel (7) definierten Winkelhalbierenden (10) durch das Zentrum dieses Kreises (11) definiert ist.

4. Schneidelement (1) nach einem der vorhergehenden Ansprüche,
**dadurch gekennzeichnet, dass** die Schneidkante (6) zumindest im Bereich des Schneidkantenabschnitts (8) durch ein Hartmetall oder Cermet gebildet ist.

5. Schneidelement (1) nach einem der vorhergehenden Ansprüche,
**dadurch gekennzeichnet, dass** die Kantenbeschichtung (2) durch mindestens eine abgeschiedene Hartstoffschicht (2) gebildet ist, wo die Kantenbeschichtung (2) auf dem Schneidkantenabschnitt (8) ausgebildet ist.

6. Schneidelement (1) nach einem der vorhergehenden Ansprüche,
**dadurch gekennzeichnet, dass** die Hartstoffschicht (2) durch Diamant, amorphen Kohlenstoff, kubisches Bornitrid oder TiB₂ gebildet ist.

7. Schneidelement (1) nach einem der vorhergehenden Ansprüche,
**dadurch gekennzeichnet, dass** die Kantenbeschichtung (2) auf die Freifläche (4) und/oder auf die Spanfläche (5) erstreckend ausgebildet ist.

8. Schneidelement (1) nach einem der vorhergehenden Ansprüche,
**dadurch gekennzeichnet, dass** eine Schichtdicke der Kantenbeschichtung (2) größer oder gleich 0,5 µm und kleiner oder gleicher 20 µm, vorzugsweise größer oder gleich 5 µm und kleiner oder 20 µm, ist, wo die Kantenbeschichtung (2) auf dem Schneidkantenabschnitt (8) ausgebildet ist.

9. Schneidelement (1) nach einem der vorhergehenden Ansprüche,
**dadurch gekennzeichnet, dass** die Kantenbeschichtung (2) durch ein PVD- oder ein CVD-Abscheidungsverfahren zumindest auf dem Schneidkantenabschnitt (8) ausgebildet ist.

10. Schneidelement (1) nach einem der vorhergehenden Ansprüche,
**dadurch gekennzeichnet, dass** das Schneidelement (1) als Schneidmesser ausgebildet ist.

11. Schneidelement (1) nach einem der vorhergehenden Ansprüche,
**dadurch gekennzeichnet, dass** es an einem Bohrwerkzeug, Fräswerkzeug oder Hobelwerkzeug ausgebildet ist.

12. Schneidelement (1) nach einem der vorhergehenden Ansprüche,
**dadurch gekennzeichnet, dass** die Teilchen durch Teilchen durch Holzspäne oder Holzfasern gebildet sind und die Matrix durch einen Klebstoff gebildet ist.

13. Verwendung eines Schneidelements (1) nach einem der Ansprüche 1 bis 12 zum Zerspanen des nichtmetallischen Verbundwerkstoffes.

14. Verwendung nach Anspruch 13, wobei die Teilchen durch Holzspäne oder Holzfasern gebildet sind und die Matrix durch einen Klebstoff gebildet ist.

15. Verwendung nach Anspruch 13 oder 14, wobei die Teilchen durch Carbonfasern oder Glasfasern gebildet sind und die Matrix durch einen Kunststoff gebildet ist.
